(19) Europäisches Patentamt / European Patent Office / Office européen des brevets

(11) **EP 2 543 697 B1**

(12) **EUROPEAN PATENT SPECIFICATION**

(45) Date of publication and mention of the grant of the patent:
**04.01.2017 Bulletin 2017/01**

(51) Int Cl.:
***C08J 9/00*** *(2006.01)*  ***B29C 55/14*** *(2006.01)*
***H01M 2/16*** *(2006.01)*  ***H01M 10/0566*** *(2010.01)*

(21) Application number: **11750649.3**

(22) Date of filing: **01.03.2011**

(86) International application number:
**PCT/JP2011/054629**

(87) International publication number:
**WO 2011/108539 (09.09.2011 Gazette 2011/36)**

(54) **METHOD OF PRODUCING A POROUS POLYPROPYLENE RESIN FILM, CELL SEPARATOR, AND CELL**

VERFAHREN ZUR HERSTELLUNG EINES PORÖSEN POLYPROPYLENFILMS, ZELLSEPARATOR UND ZELLE

PROCÉDÉ DE PRODUCTION D'UN FILM POREUX DE RÉSINE DE POLYPROPYLÈNE, SÉPARATEUR DE CELLULE, ET CELLULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.03.2010 JP 2010045978**

(43) Date of publication of application:
**09.01.2013 Bulletin 2013/02**

(73) Proprietor: **Mitsubishi Plastics, Inc.**
**Tokyo 100-8252 (JP)**

(72) Inventors:
• **YAMAMOTO, Miho**
**Nagahama-shi**
**Shiga 526-8660 (JP)**
• **YAMADA, Takeyoshi**
**Nagahama-shi**
**Shiga 526-8660 (JP)**
• **USAMI, Yasushi**
**Nagahama-shi**
**Shiga 526-8660 (JP)**

(74) Representative: **Gille Hrabal**
**Brucknerstrasse 20**
**40593 Düsseldorf (DE)**

(56) References cited:
EP-A2- 1 302 992    WO-A1-02/066233
WO-A1-2010/008003    JP-A- 7 033 895
JP-A- 2007 160 693    JP-A- 2009 185 093
JP-A- 2009 227 819

• DATABASE WPI Week 200056 Thomson Scientific, London, GB; AN 2000-589970 XP002722115, -& JP 2000 204174 A (UBE IND LTD) 25 July 2000 (2000-07-25)
• DATABASE WPI Week 200550 Thomson Scientific, London, GB; AN 2005-490961 XP002722116, -& JP 2005 171230 A (TORAY IND INC) 30 June 2005 (2005-06-30)
• Japanese Industrial Standards Committee: "HOT-rolled stainless steel plate, sheet and strip JIS G 4304:2012" In: "HOT-rolled stainless steel plate, sheet and strip JIS G 4304:2012", 20 September 2012 (2012-09-20), Japanese Standards Association, Japanese Standards Association, XP055275223, pages 1-6,
• Applicant: "JIS G 4304 (2012) Partial Translation", , 22 February 2016 (2016-02-22), XP055275231, European Patent Register Retrieved from the Internet: URL:none [retrieved on 2016-05-25]

**Description**

[Technical field]

The present invention relates to a porous film having a polypropylene series resin as the main component. Specifically, it relates to a porous film that can be used in, for instance, various separatory membranes employed for packaging use, sanitary use, animal industry use, agricultural use, architectural use or medical use, or, as a light diffuser plate, a battery separator or the like. Among them, it relates to a porous film that can be used suitably as a separator for a non-aqueous electrolyte battery.

[Background art]

Polymer porous films, which have multiple microscopic continuous holes, are being used in various fields, as separatory membranes used in the production of ultra pure water, the purification of drug solution, water treatment or the like, as waterproof moisture-permeable films used in clothing/hygiene materials and the like, or, as battery separators, or the like, used in batteries, or the like.

Secondary batteries are widely used as power sources of portable devices such as for OA (office automation), FA (factory automation), household appliances, communication devices or the like. Among them, the use of lithium ion secondary batteries in portable devices is rising sharply, from the fact that, when a device is equipped therewith, the volume efficiency becomes satisfactory, leading to a decrease in the size and weight of the instrument. In addition, since lithium ion secondary batteries have large capacity, high output, high voltage, excellent long-term conservation ability, as they are one type of non-aqueous electrolyte secondary battery, research and development for use as large secondary batteries are proceeding in a number of fields which are related to energy and environment problems, beginning with load leveling, UPS (uninterruptible power supply) and electric cars.

The working voltage of a lithium ion secondary battery, in general, is designed with 4.1 V to 4.2 V as the upper limit. At such high voltages, aqueous solutions give rise to electrolysis and thus cannot be used as electrolytic solutions. Therefore, a non-aqueous electrolytic solution, in which an organic solvent has been used, is used as electrolytic solution that can withstand even high voltages.

High-permittivity organic solvents, which allow more lithium ions to be present, are used as solvents for non-aqueous electrolytic solutions, and organic carbon acid ester compounds, such as propylene carbonate and ethylene carbonate, are mainly used as the high-permittivity organic solvents.

As supporting electrolyte that becomes a source of lithium ions in the solvent, an electrolyte with a high reactivity such as lithium hexafluorophosphate is dissolved in the solvent and used.

In a lithium ion secondary battery, from the point of preventing an internal short circuit, a separator is intercalated between the positive electrode and the negative electrode. The separator, in addition to being required from the role thereof to have insulation property and permeability to air, which becomes the passage of lithium ions, needs to be of a microporous structure for the purpose of conferring electrolytic solution diffusion/retention function. In order to meet these requirements, porous films are used as separators.

In recent years, along with the capacity-increase in lithium ion secondary batteries, development is proceeding in the direction of membrane thinning, large pores, low resistance and high porosity for the separator. As one example, separators with high porosity have been reported, such as in Japanese Patent Application Laid-open No. 2008-248231 (Patent Reference 1) or in Japanese Patent Application Laid-open No. 2000-30683 (Patent Reference 2).

In addition, regarding the separator, a study has been reported in Japanese Patent Application Laid-open No. 2007-204518 (Patent Reference 3), in which the coefficient of friction is controlled to reduce winding slippage and wrinkles, and there is also a report from the point of view of processability, such as in Japanese Patent Publication No. 3449656 (Patent Reference 4).

The Japanese Patent Application with the number JP2007-160693 (Patent Reference 5) discloses a method of producing a multi-layer porous film by biaxial stretching according to the preamble of claim 1. The European patent application with the number EP1302992 (Patent Reference 6) discloses a method for removing a pin from a battery assembly. [Prior art references]

[Patent References]

[Patent Reference 1] Japanese Patent Application Laid-open No. 2008-248231
[Patent Reference 2] Japanese Patent Application Laid-open No. 2000-30683
[Patent Reference 3] Japanese Patent Application Laid-open No. 2007-204518

[Patent Reference 4] Japanese Patent Publication No. 3449656
[Patent Reference 5] Japanese Patent Application Laid-open No. 2007 160693
[Patent Reference 6] European Patent Application No. 1302992

[Summary of the invention]

[Problems to be solved by the invention]

For a conventional secondary battery, a wound body is created by overlaying positive and negative electrodes and two separators, which is introduced into a metal tube and sealed to be assembled as a battery. In the process of creating the wound body, after winding, a winding pin is released to obtain the wound body. In this wound body, since two separators are wound with some degree of length at the central portion of the wound body that is close to the winding pin and the outer portion, when releasing the winding pin, if the slipping ability and pin-releasability of the separators are poor, winding slippage occurs between the separators.

Thus, an object of the present invention is to provide a novel porous film capable of exerting excellent slipping ability and pin-releasability when used as, for instance, a battery separator.

[Means to solve the problems]

The present invention proposes a polypropylene series resin porous film, which is a porous film having a polypropylene series resin as the main component, in which the coefficient of static friction against film is greater than the coefficient of static friction against SUS.

[Effects of the invention]

The polypropylene series resin porous film proposed by the present invention allows a polypropylene series resin porous film to be provided, which, when used as a battery separator, exerts excellent slipping ability and pin-releasability, and does not give rise to winding slippage or the like.

[Brief description of the drawings]

[Fig. 1] Fig.1 is a partially exploded perspective view showing an example of battery containing a polypropylene series resin porous film according to an example of the present invention.
[Fig. 2] Fig.2 is a view showing an example of pin used in the winding step.
[Fig. 3] Fig.3 is a view showing a measurement device for measuring pin-releasability.
[Fig. 4] Fig.4 is a view showing a method for immobilizing a porous film in an X-ray diffraction measurement.

[Mode for carrying out the invention]

Hereafter, a polypropylene series resin porous film serving as an example of mode for carrying out the present invention will be described (hereafter referred to as " the present porous film").

(Correlation relationship between the coefficient of static friction against film and the coefficient of static friction against SUS)

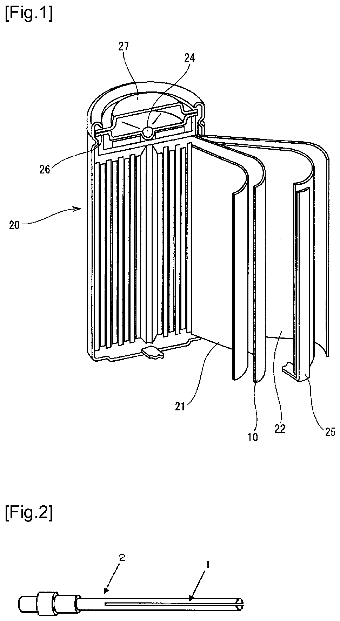

The present porous film is a porous film having a polypropylene series resin as the main component, in which film, regarding the correlation relationship between the coefficient of static friction against film and the coefficient of static friction against SUS, the coefficient of static friction against film is greater than the coefficient of static friction against SUS.
Here, the coefficient of static friction against film means the largest numerical value among the coefficients of static friction measured when two films to be measured are prepared, the two films are superposed in the front-front, front-back and back-back combinations, and each is caused to slide.
In addition, the coefficient of static friction against SUS means the larger numerical value of the front side or the back side among the coefficients of static friction measured when the front side or the back side of a film to be measured and SUS are superposed, and each is caused to slide.
Due to the coefficient of static friction against film being larger than the coefficient of static friction against SUS, the force for releasing a winding pin such as shown in Fig. 2 becomes smaller than the force that gives rise to winding slippage between the porous films; therefore, the winding pin can be pulled-out readily without giving rise to winding slippage, which is thus preferable.

Winding slippage indicates one in which the profile of the entirety of the wound body is slanted or a portion of the porous film protrudes from the winding center of the wound body, having followed a winding pin during its release in a battery assembly process in which a battery element is pulled-out.

The correlation relationship between the coefficient of static friction against film and the coefficient of static friction against SUS, in addition to being controllable by altering the composition, can be controlled mainly by the stretching conditions. For instance, raising the transversal stretch ratio allows the coefficient of static friction against film to be enlarged with respect to the coefficient of static friction against SUS.

(Coefficient of static friction against film)

The coefficient of static friction against film of the present porous film is preferably 0.5 or greater, more further preferable 0.6 or greater, further further preferable 0.7 or greater. Meanwhile, although there is no particular limitation regarding the upper limit, from the point of view of processability such as wrinkles, 2.0 or less is preferable, 1.8 or less is more preferable and 1.5 or less is further preferable. If the value of the coefficient of static friction against film is 0.5 or greater, when the film is used as a battery separator, after being wound onto a winding pin, the battery element can be pulled-out from the winding pin without provoking winding slippage in a battery assembly process in which a battery element is pulled-out.

The coefficient of static friction against film, in addition to being controllable by altering the composition, can be controlled mainly by the stretching conditions. For instance, raising the longitudinal stretch ratio allows the coefficient of static friction against film to be enlarged.

(Coefficient of static friction against SUS)

The coefficient of static friction against SUS of the present porous film is preferably less than 0.9, more preferably 0.85 or less, and further preferably 0.8 or less. Meanwhile, although there is no particular limitation regarding the lower limit, from the point of view of processability, 0.1 or greater is preferable and 0.2 or greater is further preferable. If the value of the coefficient of static friction against SUS is less than 0.9, when the film is used as a battery separator, the battery element can be pulled-out from the winding pin without provoking winding slippage in a battery assembly process in which a battery element is pulled-out.

The coefficient of static friction against SUS, in addition to being controllable by altering the composition, can be controlled mainly by the stretching conditions. For instance, lowering the longitudinal stretch ratio allows the coefficient of static friction against SUS to be diminished.

(Difference in the coefficient of static friction against film between the front and the back sides)

For the present porous film, a difference of 10% or less in the coefficients of static friction against film between the front and the back sides is preferable, 8% or less being more preferable and 5% or less being further preferable.

For a conventional secondary battery, a wound body is created by overlaying positive and negative electrodes and two separators, which is introduced into a metal tube and sealed to be assembled as a battery. In the process of creating the wound body, after winding, a winding pin is released to obtain the wound body. In this wound body, two separators are wound with some degree of length at the central portion of the wound body that is close to the winding pin and the outer portion. When releasing the winding pin, if there is a difference in the coefficient of static friction against film between the front and the back of the separator, a difference in the coefficient of friction arises at the interface between adjacent separators between front-front and back-back, provoking winding slippage at the separator interface with the smaller coefficient of friction, which is not preferable. In so doing, if the difference in the coefficient of static friction against film between the front and the back sides is 10% or less, after being wound onto a winding pin, the battery element can be pulled-out from the winding pin without provoking winding slippage when pulling out the battery element.

The difference in the coefficient of static friction against film between the front and back sides can be controlled by the manufacturing conditions. For instance, the coefficients of static friction against film of the front and the back sides can be controlled by suitably modifying the production method, such as embossing or casting using a sleeve roll.

(Modulus of elasticity in tension)

In the present porous film, the modulus of elasticity in tension in the flow direction of the porous film is preferably 350 MPa or greater, more preferably 400 MPa or greater, and further preferably 450 MPa or greater. Meanwhile, while there is no particular limitation regarding the upper limit, 2,000 MPa or lower is preferable, 1,350 MPa or lower is more preferable, and 1,000 MPa or lower is further preferable. If the modulus of elasticity in tension is 350 MPa or greater, when the film is used as a battery separator, polypropylene series resin porous film can be used adequately with no such problems as wrinkles being introduced due to the polypropylene series resin porous film becoming stretched, when handling such as winding/feeding the polypropylene series resin porous film. Meanwhile, 2,000 MPa or lower is preferable from the points of view of flexibility and handling.

The modulus of elasticity in tension can be controlled by the stretching conditions. For instance, the modulus of elasticity in tension becomes large when the longitudinal stretch ratio is raised. In addition, lowering the porosity to increase the amount of resin per unit cross section is also one method of raising the modulus of elasticity in tension. However, when the porosity is lowered, other physical properties sometimes deteriorate by trade-off, such as air-permeability deteriorates, and thus adjustments of the manufacturing conditions become necessary.

(Thickness)

For the film-thickness of the present porous film, 5 $\mu$m to 100 $\mu$m is preferable, more preferably 8 $\mu$m or greater or 50 $\mu$m or less, and even more preferably 10 $\mu$m or greater or 30 $\mu$m or less. When using the film as a battery separator, if the thickness is 5 $\mu$m or greater, substantially necessary electric insulation can be obtained. Thus, even when, for instance, a large force is applied to a protruding portion of an electrode, a short circuit that would pierce the battery separator is less likely to occur, such that safety as a battery can be raised. Meanwhile, if the film-thickness is 100 $\mu$m or less, since the electric resistance of the porous film can be reduced, the capabilities of the battery can be secured sufficiently.

(Porosity)

For the porosity of the present porous film, 40% or greater is preferable, 45% or greater is more preferable, and 50% or greater is further preferable. If the porosity is 40% or greater, a layered porous film which secures continuity and has excellent air-permeating properties can be obtained. Meanwhile, while there is no particular limitation regarding the upper limit, 90% or less is more preferable. If the porosity 90% or less, the strength of the polypropylene series resin porous film is less likely to decrease, and is also preferable from the point of view of handling.

Porosity is a value measured by the methods described in the examples.

(Air-permeability)

For the air-permeability of the present porous film, 1,000 seconds/100 ml or less is preferable, 10 to 900 seconds/100 ml is more preferable, and 50 to 800 seconds/100 ml is further preferable. If the air-permeability is 1,000 seconds/100 ml or less, the presence of continuity in the polypropylene series resin porous film is indicated, and excellent air-permeating capability can be demonstrated, which is therefore preferable.

Air-permeability represents the difficulty for air to pass through in the film-thickness direction, and is expressed concretely as a number necessary for 100 ml of air to pass through the film. Therefore, a smaller numerical value means that the through-passage is facilitated, and a larger numerical value means that the through-passage is difficult. That is to say, a smaller numerical value thereof means that continuity in the thickness direction of the film is satisfactory, and a larger numerical value thereof means that continuity in the thickness direction of the film is poor. Continuity is the extent of connection of the pores in the film-thickness direction.

If air-permeability of the present porous film is low, the film can be used in a variety of applications. For instance, when using the film as a battery separator, low air-permeability means that the movement of lithium ions is facilitated and battery performance is excellent, which is thus preferable.

($\beta$ activity)

It is preferable that the present porous film has $\beta$ activity.

$\beta$ activity can be considered as an indicator showing that a polypropylene series resin had generated a $\beta$-crystal in a film-shaped object prior to stretching. If the polypropylene series resin within the film-shaped object prior to stretching had generated a $\beta$-crystal, since micropores can be formed readily by performing stretching even when no additive such as a filler is used, a polypropylene series resin porous film having air-permeating property can be obtained.

In the present porous film, regarding the assessment of the presence or absence of "$\beta$ activity", if a crystal-melting peak temperature derived from a $\beta$-crystal is detected by a differential scanning calorimeter, described below, or, if a diffraction peak derived from a $\beta$-crystal is detected by a measurement using an X-ray diffractometer, described below, the film can be assessed as having "$\beta$ activity".

Concretely, with a differential scanning calorimeter, when the present porous film is raised in temperature from 25°C to 240°C at a heating rate of 10°C/minute, then, retained for one minute, next, lowered in temperature from 240°C to 25°C at a cooling rate of 10°C/minute, then, retained for one minute, and further, raised in temperature again from 25°C to 240°C at a heating rate of 10°C/minute, if a crystal-melting peak temperature (Tmβ) derived from a β-crystal of the polypropylene series resin is detected, the film can be assessed as having "β activity".

The degree of β activity of the present porous film is a value calculated using the crystalline melting heat derived from the α-crystals (ΔHmα) and the crystalline melting heat derived from the β-crystals (ΔHmβ) of the polypropylene series resin to be detected, by the following formula:

$$\text{Degree of } \beta \text{ activity (\%)} = [\Delta Hm\beta/(\Delta Hm\beta + \Delta Hm\alpha)] \times 100$$

For instance, when the polypropylene series resin is homopolypropylene, the degree of β activity can be calculated from the crystalline melting heat derived from the β-crystals (ΔHmβ) detected mainly in a range of 145°C or higher but less than 160°C and the crystalline melting heat derived from the α-crystals (ΔHmα) detected mainly in a range of 160°C or higher but 170°C or lower. In addition, for instance in the case of a random polypropylene in which ethylene is copolymerized at 1 to 4% by mole, the degree of β activity can be calculated from the crystalline melting heat derived from the β-crystals (ΔHmβ) detected mainly in a range of 120°C or higher but less than 140°C and the crystalline melting heat derived from the α-crystals (ΔHmα) detected mainly in a range of 140°C or higher but 165°C or lower.

It is preferable that the degree of β activity of the present porous film is larger, and it is preferable that the degree of β activity is 20% or greater. More preferable is 40% or greater, and particularly preferable is 60% or greater. If the polypropylene series resin porous film has a degree of β activity of 20% or greater, β-crystals of polypropylene series resin can be generated numerously also within the film-shaped object prior to stretching, fine and uniform pores are formed numerously by stretching, and as a result, the film can be turned into a lithium ion battery separator with high mechanical strength and excellent air-permeating capability.

While the upper limit value of the degree of β activity is not limited in particular, since the higher the degree of β activity, the more effectively the effects are obtained, the closer to 100% is more preferable.

The presence or absence of β activity can be assessed also with a diffraction profile obtained by wide-angle X-ray diffraction measurement of a polypropylene series resin porous film that was subjected to a specific heat-treatment.

In detail, for a polypropylene series resin porous film subjected to heat-treatment at 170°C to 190°C, which are temperatures exceeding the melting point of the polypropylene series resin, and slowly cooled to generate/grow β-crystals, if a wide-angle X-ray measurement is carried out and a diffraction peak derived from the (300) plane of the β-crystals of the polypropylene series resin is detected in a range of 2θ = 16.0° to 16.5°, it can be assessed that there is β activity.

For details related to the β-crystal structure of a polypropylene series resin and wide-angle X-ray diffractometry, Macromol. Chem. 187, 643-652 (1986), Prog. Polym. Sci. Vol. 16, 361-404 (1991), Macromol. Symp. 89, 499-511 (1995), Macromol. Chem. 75, 134 (1964), and references cited therein can be referred. Regarding detailed evaluation methods for β activity using wide-angle X-ray diffractometry, the methods will be indicated in the examples described later.

Whether the present porous film has a monolayer structure or other porous layers are layered, the β activity can be measured in a state comprised of all layers of polypropylene series resin porous film, in both cases.

Hypothetically, when a layer containing a polypropylene series resin, or the like, is layered in addition to a layer comprising a polypropylene series resin, it is preferable that both layers have β activity.

As methods for obtaining β activity, the method of adding a polypropylene treated so as to generate radical peroxides and the method of adding a β-crystal nucleating agent to the composition, as described in Japanese Patent No. 3739481, and the like, may be cited.

<Layer constitution of the present porous film>

Whether the present porous film is a monolayer or layered does not matter. Layering two layers or more is preferable.

The layer constitution of the present porous film is not limited in particular as long as at least one layer containing polypropylene series resin (hereinafter referred to "A layer") is present. In addition, another layer (hereinafter referred to "B layer") can also be layered to an extent that does not impede the functions of the present porous film.

As the B layer, for instance, strength retention layer, heat-resistant layer (high melting temperature resin layer), shutdown layer (low-melting temperature resin layer), and the like, may be cited. For instance, when using as a battery separator, it is preferable that a low melting resin layer is layered onto the A layer that shuts the pores at high temperature atmosphere and secures battery safety, such as described in Japanese Patent Application Laid-open No. H04-181651.

Concretely, two-layer structures in which A layer/B layer have been layered, three-layer structure in which A layer/B layer/A layer have been layered, and the like, can be given as examples. In addition, in combination with a layer having another function, such a morphology as three-species, three layers is also possible. In this case, while the layering order with the layer having another function does not matter in particular, it is more preferable that the outer layer of the present porous film is the A layer. Further, as necessary, as the number of layers, 4 layers, 5 layers, 6 layers and 7 layers are adequate.

The physical properties of the present porous film can be adjusted suitably by the layer constitution or the layer ratio, the composition of each layer, and the production method.

<Components of the A layer>

The A layer described above can be fabricated for instance by extrusion-molding a resin composition containing a polypropylene series resin and a β-crystal nucleating agent to produce a pore-free film-shaped object, and performing a predetermined stretching.

Thus, polypropylene series resin and β-crystal nucleating agent will be described here.

However, the production method of the A layer mentioned above is absolutely illustrative, and production methods of the A layer are not limited to this production method.

(Polypropylene series resin)

As polypropylene series resin, for instance, homopropylene (propylene homopolymer), or, random copolymer or block copolymer of propylene and an α-olefin such as ethylene, 1-butene, 1-pentene, 1-hexene, 1-heptene, 1-octene, 1-nonene or 1-decene, and the like, may be cited. Among these, homopolypropylene is more suitable from the point of view of maintaining mechanical strength, heat resistance, and the like, of the polypropylene series resin porous film.

In addition, as polypropylene series resin, it is preferable that the isotactic pentad fraction (mmmm fraction), which indicates stereoregularity, is 80 to 99%. More preferably, the isotactic pentad fraction is 83 to 98%, and even more preferably 85 to 97%. If the isotactic pentad fraction is too low, there is the risk that the mechanical strength of the film decreases. Meanwhile, regarding the upper limit of the isotactic pentad fraction, it is governed by the upper limit value obtained industrially at present time. However, regarding when a resin with higher regularity is developed at the industry level in the future, there is no limitation to the upper limit value.

The isotactic pentad fraction (mmmm fraction) means the proportion of tertiary structure in which five methyl groups, which are side chains, are all located in the same direction with respect to a main chain of carbon-carbon bonds constituted by five arbitrary successive propylene units.

Attribution of a signal in the methyl group region is determined according to A. Zambelli et al (Macromolecules 8, 687, (1975)).

As polypropylene series resin, it is preferable that Mw/Mn, which is a parameter indicating the molecular weight distribution, is 2.0 to 10.0. More preferably, the Mw/Mn is 2.0 to 8.0, and even more preferably 2.0 to 6.0. The fact that the Mw/Mn is small means that the molecular weight distribution is narrow. If Mw/Mn is less than 2.0, in addition to problems arising, such as extrusion-moldability decreases, industrial production becomes also difficult. Meanwhile, if Mw/Mn exceeds 10.0, there are more low molecular weight constituents and the mechanical strength of the present porous film is prone to decrease.

The Mw/Mn is a value that is measured by the GPC (gel permeation chromatography) method.

The melt flow rate (MFR) of the polypropylene series resin is not limited in particular. In general, it is preferable that the MFR is 0.5 to 15 g/10 minutes, and 1.0 to 10 g/10 minutes is more preferable. With MFR set at 0.5 g/10 minutes or greater, the molten viscosity of the resin during the forming process is high, allowing sufficient productivity to be secured. Meanwhile, set at 15 g/10 minutes or lower, the mechanical strength of the obtained polypropylene series resin porous film can be retained sufficiently.

The MFR is a value measured according to JIS K7210, under the conditions: 230°C temperature and 2.16 kg load.

Production methods for the polypropylene series resin are not limited in particular. Well-known polymerization methods using well-known polymerization catalysts, for instance, polymerization methods using multi-site catalysts represented by Ziegler-Natta type catalysts, and single-site catalysts represented by metallocene series catalysts, and the like, may be cited.

As polypropylene series resins, commercially available products can be used, such as, for instance, product names "NOVATEC PP" and "WINTEC" (manufactured by Japan Polypropylene Corporation), "VERSIFY", "NOTIO" and "TAFMER XR" (manufactured by Mitsui Chemicals Inc.), "ZELAS" and "THERMORUN" (manufactured by Mitsubishi Chemical Corporation), "Sumitomo NOBRENE" and "TAFCELENE" (manufactured by Sumitomo Chemical Co., Ltd.), "Prime TPO" (manufactured by Prime Polymer Co., Ltd.), "Adflex", "Adsyl" and "HMS-PP (PF814)" (manufactured by SunAllomer Ltd.), and "Inspire" (Dow Chemical).

(β-crystal nucleating agent)

As β-crystal nucleating agents used in the present porous film, those indicated below may be cited. They have no reason to be limited in particular as long as they increase the generation/growth of β-crystals of polypropylene series resin, and further, two or more species may be mixed for use.

As β-crystal nucleating agents, for instance, amide compounds; tetraoxaspiro compound; quinacridones; iron oxides having nano-scale size; alkaline or alkaline earth metal salts of carboxylic acids represented by potassium 1,2-hydroxystearate, magnesium benzoate or magnesium succinate, magnesium phthalate and the like; aromatic sulfonic acid compounds represented by sodium benzenesulfonate or sodium naphthalenesulfonate and the like; di- or triesters of di- or tribasic carboxylic acids; phthalocyanine series pigments represented by phthalocyanine blue and the like; binary compounds comprising a constituent A that is an organic dibasic acid and a constituent B that is an oxide, a hydroxide or a salt of a Group IIA metal from the periodic table; compositions comprising a cyclic phosphorous compound and a magnesium compound, and the like, may be cited. In addition, Japanese Patent Application Laid-open No. 2003-306585, Japanese Patent Application Laid-open No. H06-289566, and Japanese Patent Application Laid-open No. H09-194650 give descriptions regarding concrete species of nucleating agent.

As commercial products of β-crystal nucleating agent, for instance, β-crystal nucleating agent "NJSTAR NU-100" manufactured by New Japan Chemical Co., Ltd., and as concrete examples of polypropylene series resins added with a β-crystal nucleating agent, polypropylene "Bepol B-022SP" manufactured by Aristech, polypropylene "Beta (β)-PP BE60-7032" manufactured by Borealis, polypropylene "BNX BETAPP-LN" manufactured by Mayzo, and the like, may be cited.

The proportion of β-crystal nucleating agent to be added to the polypropylene series resin needs to be adjusted suitably according to the species of the β-crystal nucleating agent or the composition of the polypropylene series resin, and the like. From such points of view, it is preferable that the proportion of β-crystal nucleating agent is 0.0001 to 5.0 parts by mass with respect to 100 parts by mass of polypropylene series resin. More preferable is 0.001 to 3.0 parts by mass, and further preferable is 0.01 to 1.0 parts by mass. If 0.0001 parts by mass or greater, β-crystals of polypropylene series resin can be generated/grown sufficiently during production, also when used as a battery separator, sufficient β activity can be secured, and the desired air-permeating capability is obtained. Further, if the addition is 5.0 parts by mass or less, it is not only economically advantageous, but also there is no bleeding or the like of the β-crystal nucleating agent onto the polypropylene series resin porous film surface, which is preferable.

In addition, hypothetically, when a layer containing a polypropylene series resin, or the like, is layered in addition to a layer comprising a polypropylene series resin, the amounts of β-crystal nucleating agent added in each of the layers may be identical or may be different. The porous structure of each layer can be adjusted suitably by changing the amounts of β-crystal nucleating agent added.

(Other constituents)

In the present porous film, aside from the constituents described above, additives mixed conventionally into a resin composition can be added suitably, within ranges that do not noticeably inhibit the effects of the present invention.

As the additives mentioned above, additives that are added for the purpose of improving/adjusting forming processability, productivity and other various physical properties may be cited, such as, for instance, recycled resins generated from trimming losses such as edges, silica, talc, kaolin, inorganic particles such as calcium carbonate, titanium oxide, pigments such as carbon black, fire retardant, weather-resistance stabilizer, heat-resistance stabilizer, anti-static agent, molten viscosity improver, cross-linking agent, lubricant, nucleating agent, plasticizer, anti-aging agent, oxidation inhibitor, light stabilizer, ultraviolet light absorbent, neutralization agent, anti-clouding agent, anti blocking agent, slipping agent or colorants.

Concretely, oxidation inhibitors described in P154 to P158 of "Plastics Compounding Agents", ultraviolet light absorbent described in P178 to P182, surfactant serving as anti-static agent described in P271 to P275, lubricant described in P283 to P294 and the like, may be cited.

<Components of the B layer>

The B layer described above can be fabricated for instance by extrusion-molding a resin composition containing a polyethylene series resin and a porositization-promoting compound to produce a pore-free film-shaped object, and performing a predetermined stretching.

Thus, a polyethylene series resin and a porositization-promoting compound will be described here.

However, the production method of the B layer mentioned above is absolutely illustrative, and production methods of the B layer are not limited to this production method.

(Polyethylene series resin)

As polyethylene series resins, not only homopolymeric polyethylenes such as, for instance, ultra-low density polyethylenes, low density polyethylenes, high density polyethylenes, linear low density polyethylenes, furthermore, ultra-high molecular weight polyethylenes having characteristics in the molecular weight, but also ethylene propylene copolymers, or co-polymer polyethylenes of a polyethylene series resin and another polypropylene series resin, may be cited. Among these, homopolymeric polyethylenes or co-polymer polyethylenes in which the amount of $\alpha$-olefin co-monomer is 2% by mole or less is preferable, and homopolymeric polyethylenes are further preferable. There is no particular limitation regarding the species of $\alpha$-olefin co-monomer.

It is preferable that the density of the polyethylene series resin is 0.910 to 0.970 g/cm$^3$, of which 0.930 to 0.970 g/cm$^3$ is all the more preferable, and of this, 0.940 to 0.970 g/cm$^3$ is further preferable. If the density is 0.910 g/cm$^3$ or greater, the layer can have a suitable degree of SD characteristics, which is preferable. Meanwhile, if 0.970 g/cm$^3$ or lower, it is preferable, aside from allowing the layer to have a suitable degree of SD characteristics, on the point that stretchability is maintained.

The density of the polyethylene series resin can be measured according to JIS K7112 using the density gradient tube method.

The melt flow rate (MFR) of the polyethylene series resin is not limited in particular. In general, MFR is preferably 0.03 to 30 g/10 minutes, of which 0.3 to 10 g/10 minutes is more preferable. If MFR is 0.03 g/10 minutes or greater, as the molten viscosity of the resin during forming process is sufficiently low, productivity is excellent, which is preferable. Meanwhile, if 30 g/10 minutes or lower, as sufficient mechanical strength can be obtained, it is preferable.

MFR can be measured according to JIS K7210 with the conditions: 190°C temperature and 2.16 kg load.

There is no particular limitation on the polymerization catalysts used in the polymerization of polyethylene series resin. Any is adequate, for instance, Ziegler type catalyst, Philips type catalyst, and Kaminsky type catalyst or the like.

As polymerization methods for the polyethylene series resin, there is one-step polymerization, two-step polymerization, or greater multi-step polymerization, and polyethylene series resins from any methods can be used.

(Porositization-promoting compound)

Adding a porositization-promoting compound to the polyethylene series resin is preferable. By adding the porositization-promoting compound, porous structures can be obtained more effectively, and controlling pore shapes and pore sizes is facilitated.

The porositization-promoting compound is not to be limited in particular. Illustrating concretely, it is preferable that at least one species among the porositization-promoting compounds chosen from modified polyolefin resins, alicyclic saturated hydrocarbon resins or modified bodies thereof, ethylene series copolymers or waxes, is contained. Among them, alicyclic saturated hydrocarbon resins or modified bodies thereof, ethylene series copolymers or waxes, which have greater effects on porositization, are more preferable, and waxes are further preferable from the point of view of moldability.

Regarding alicyclic saturated hydrocarbon resins and modified bodies thereof, petroleum resins, rosin resins, terpene resins, coumarone resins, indene resins, coumarone-indene resins, and modified bodies thereof, and the like, may be cited.

The petroleum resins mentioned above refer to aliphatic series, aromatic series and copolymer series petroleum resins obtained by homo- or copolymerizing one species or two or more species of compounds, which are aliphatic olefins and diolefins in C4 to C10, aromatic compounds in C8 or greater having an olefinic unsaturated bond obtained from byproducts due to pyrolysis and the like of naphtha, and included among them.

As petroleum resins, there are, for instance, aliphatic series petroleum resins having the C5 fraction as the main raw material, aromatic series petroleum resins having the C9 fraction as the main raw material, copolymer series petroleum resins thereof and alicyclic series petroleum resins. Illustrative are terpene resins and terpene-phenol resins from $\beta$-pinene as terpene resins, and in addition, rosin resins such as gum rosin and wood rosin, esterified rosin resins, which have been modified with glycerin or pentaerythritol, and the like, as rosin series resins.

While alicyclic saturated hydrocarbon resins and modified bodies thereof demonstrate relatively satisfactory compatibility when mixed in a polyethylene series resin, from the aspects of color tone and thermostability, petroleum resins are more preferable, and using hydrogenated petroleum resins is further preferable.

The hydrogenated petroleum resins are those obtained by hydrogenating petroleum resins by commonly used methods. For instance, hydrogenated aliphatic series petroleum resins, hydrogenated aromatic series petroleum resins, hydrogenated copolymer series petroleum resins and hydrogenated alicyclic series petroleum resins, as well as hydrogenated terpene series resins, may be cited. Among the hydrogenated petroleum resins, hydrogenated alicyclic series petroleum resins comprising cyclopentadiene series compound and aromatic vinyl series compound that have been copolymerized and hydrogenated are particularly preferable. As commercially available hydrogenated petroleum resins, "ARKON" (manufactured by Arakawa Chemical Industries, Ltd.), and the like, may be cited.

In the above description, the ethylene series copolymers given as porositization-promoting compound examples are compounds obtained by copolymerizing ethylene and one species or more among vinyl acetate, unsaturated carboxylic acid, unsaturated carboxylic acid anhydride or carboxylate ester, and the like.

For the ethylen series copolymer, the content percentage of ethylene monomer unit is preferably 50% by mass or greater, more preferably 60% by mass or greater, and further preferably 65% by mass or greater. Meanwhile, regarding the upper limit, it is preferable that the content percentage of the ethylene monomer unit is preferably 95% by mass or less, more preferably 90% by mass or less, further preferably 85% by mass or less. If the content percentage of ethylene monomer unit is within a predetermined range, porous structures can be formed more effectively.

For the ethylene series copolymers, those with MFR (JIS K7210; temperature: 190°C; load: 2.16 kg) of 0.1 g/10 minutes or greater but 10 g/10 minutes or lower are used suitably. If the MFR is 0.1 g/10 minutes or greater, extrusion processability can be maintained satisfactorily, while if MFR is 10 g/10 minutes or lower, a reduction in the strength of the film is unlikely to occur, and thus is preferable.

As the ethylene series copolymers, for instance, "EVAFLEX" (manufactured by Du Pont-Mitsui Polychemicals Co., Ltd.) and "NOVATEC EVA" (manufactured by Japan polyethylene Corporation) as ethylene-vinyl acetate copolymers, "NUC co-polymer" (manufactured by Nippon Unicar Company Limited), EVAFLEX-EAA (manufactured by Du Pont-Mitsui Polychemicals Co., Ltd.) and "REXPEARL EAA" (manufactured by Japan ethylene Corporation) as ethylene-acrylic acid copolymers, "ELVALOY" (manufactured by Du Pont-Mitsui Polychemicals Co., Ltd.) and "REXPEARL EMA" (manufactured by Japan ethylene Corporation) as ethylene-(meth)acrylic acid copolymers, "REXPEARL EEA" (manufactured by Japan ethylene Corporation) as ethylene-ethyl acrylate copolymer, "ACRYFT" (manufactured by Sumitomo Chemical Co., Ltd.) as ethylene-methyl (meth)acrylate copolymer, "BONDINE" (manufactured by Sumitomo Chemical Co., Ltd.) as ethylene-vinyl acetate-maleic anhydride terpolymers, "BONDFIRST" (manufactured by Sumitomo Chemical Co., Ltd.) as ethylene-glycidyl methacrylate copolymer, ethylene-vinyl acetate-glycidyl methacrylate terpolymer, ethylene-methyl acrylate-glycidyl methacrylate terpolymer and the like, can be acquired commercially.

In the above descriptions, waxes indicated as porositization-promoting compound examples refer to organic compounds that fulfill the properties (i) and (ii) below:

(i) The melting point is 40°C to 200°C.
(ii) The molten viscosity at a temperature that is 10°C higher than the melting point is 50 Pa·s or lower.

Waxes here are meant to include polar or nonpolar waxes, polypropylene waxes, polyethylene waxes and wax modifiers. Concretely, polar waxes, nonpolar waxes, Fischer-Tropsch waxes, oxidized Fischer-Tropsch waxes, hydroxystearamide waxes, functionalized waxes, polypropylene waxes, polyethylene waxes, wax modifiers, amorphous waxes, carnauba waxes, castor oil waxes, microcrystalline waxes, beeswax, castor waxes, vegetable waxes, candelilla waxes, Japanese waxes, ouricury waxes, Douglas fir bark waxes, rice bran waxes, jojoba waxes, bayberry waxes, montan waxes, ozokerite waxes, ceresin waxes, petroleum waxes, paraffin waxes, chemically modified hydrocarbon waxes, substitutional amide waxes, and combinations and derivatives thereof may be cited. Among them from the point of allowing porous structures to be formed effectively, paraffin waxes, polyethylene waxes and microcrystalline waxes are preferable, and from the point of view of SD characteristics, microcrystalline waxes, which allow the pore size to be further miniaturized, are further preferable.

"FT-115" (manufactured by Nippon Seiro Co., Ltd.) as commercially available polyethylene waxes, and "Hi-Mic" (manufactured by Nippon Seiro Co., Ltd.) as microcrystalline waxes, and the like, may be cited.

For the mixing amount of the porositization-promoting compound, 1 part by mass or greater is preferable, in particular 5 parts by mass or greater is all the more preferable, and 10 parts by mass or greater is further preferable, with respect to 100 parts by mass of polyethylene series resin contained in one layer, when micropores are formed by detaching the interface between polyethylene series resin and the porositization-promoting compound. Meanwhile, as the upper limit, 50 parts by mass or less is preferable, in particular 40 parts by mass or less is all the more preferable, and 30 parts by mass or less is further preferable. If the mixing amount of the porositization-promoting compound with respect to 100 parts by mass of polyethylene series resin is 1 part by mass or greater, the aimed effects manifested by a satisfactory porous structure are sufficiently obtained. In addition, if the mixing amount of the porositization-promoting compound is 50 parts by mass or less, more stabilized moldability can be secured.

(Other constituents)

As necessary, aside from polyethylene series resins and porositization-promoting compounds, compounds called rubber constituents such as thermoplastic resin and thermoplastic elastomer may be added to extents that are not detrimental to the thermal properties, concretely, porositization, of the porous film.

Aside from polyethylene series resins and porositization-promoting compounds, an additive generally mixed into a resin composition, or another constituent may be contained.

As the additives mentioned above, additives that are added for the purpose of improving/adjusting forming processability, productivity and other various physical properties may be cited, such as, recycled resins generated from trimming losses such as edges, silica, talc, kaolin, inorganic particles such as calcium carbonate, titanium oxide, pigments such as carbon black, fire retardant, weather-resistance stabilizer, heat-resistance stabilizer, anti-static agent, molten viscosity improver, cross-linking agent, lubricant, nucleating agent, plasticizer, anti-aging agent, oxidation inhibitor, light stabilizer, ultraviolet light absorbent, neutralization agent, anti-clouding agent, anti blocking agent, slipping agent or colorants.

Among them, nucleating agents are preferable, as they have the effects of controlling the crystal structure of the polyethylene series resin, refining the porous structure at the time of pore-opening by stretching.

<Production method for the present porous film>

In the following, production methods for the present porous film will be described. The present invention is not to be limited solely to the polypropylene series resin porous films produced by such production methods.

The fabrication method for the pore-free film-shaped object may use well-known methods, without being limited in particular. For instance, a method which a thermoplastic resin composition is melted by using an extruder, extruded from a T-die and solidified by cooling with a cast rolls may be cited. In addition, a method which a film-shaped object produced by a tubular method is cut open and planarized can also be applied.

Regarding stretching methods for the pore-free film-shaped object, there are techniques such as roll drawing method, rolling method, tenter stretching method and simultaneous biaxial stretching method, and it suffices to carry out uniaxial stretching or biaxial stretching with these, alone or by combining two or more. Among these, from the point of view of porous structure control, adopting successive biaxial stretching is preferable.

In addition, when turning the present porous film into a laminate, the production methods are divided roughly into the following four types according to the sequence of porositization and layering:

(a) Methods whereby, after each layer has been porositized, the porositized each layer is layered by being laminated or adhered with an adhesive or the like.
(b) Methods whereby each layer is layered to fabricate a layered pore-free film-shaped object, and then, the pore-free film-shaped object is porositized.
(c) Methods whereby any one layer among each of the layers is porositized, then, layered with another layer of pore-free film-shaped object, and porositized.
(d) Methods whereby a porous layer is fabricated, and then, application of a coating of inorganic/organic particle or the like, vapor deposition of metal particle, or the like is carried out for layering.

In the production of the present porous film, from the points of view of simplicity and productivity of the process thereof, using the methods of (b) is preferable, and above all, in order to secure the inter-layer adhesive property of two layers, the methods whereby a layered pore-free film-shaped object is fabricated by co-extrusion and then porositized is particularly preferable.

Hereafter, the production methods will be described in detail.

First, a mixed resin composition of polypropylene series resin, if necessary thermoplastic resin, and additive is prepared. For instance, raw materials such as polypropylene series resin, β-crystal nucleating agent, and other additives as desired are mixed preferably using a Henschel mixer, a super mixer, a tumbler-type mixer or the like, or by placing all the constituents into a bag and hand-blending, then, melt-kneaded with a single screw or a twin screw extruder, a kneader or the like, preferably a twin screw extruder, and then cut to obtain a pellet.

The pellet is introduced into an extruder, and extruded from a T-die extrusion mouth to mold a film-shaped object.

The type of T-die is not limited in particular. For instance, when the present porous film adopts a layered structure of two species and three layers, it does not matter that the T-die is a multi-manifold type for two species and three layers, or that it is a feed block-type for two species and three layers.

While the T-die gap to be used is determined by the thickness of the film ultimately needed, the stretching conditions, the draft rate, various conditions and the like, it is in general on the order of 0.1 to 3.0 mm, and preferably 0.5 to 1.0 mm. If the T-die gap is less than 0.1 mm, it is not preferable from the point of view production speed, and in addition, if greater than 3.0 mm, it is not preferable from the point of view of production stability as the draft rate becomes greater.

In the extrusion-molding, the extrusion process temperature is adjusted suitably according to the flowing properties, moldability and the like of the resin composition. Roughly 180 to 350°C is preferable, 200 to 330°C is more preferable, and 220 to 300°C is further preferable. If 180°C or higher, it is preferable from the fact that the viscosity of the molten resin is sufficiently low with excellent moldability, increasing productivity. Meanwhile, by being at 350°C or lower, degradation of the resin composition and consequently a decrease in the mechanical strength of the obtained polypropylene series resin porous film can be suppressed.

The cooling-solidification temperature of the cast rolls is preferably 80 to 150°C, more preferably 90 to 145°C, and even more preferably 100 to 140°C. By being in the defined temperature range, such trouble as the extruded molten resin adheres and winds onto the cast roll is unlikely to occur, allowing the resin to be turned into a film-shaped object efficiently, which is preferable. In addition, in a film-shaped object having β activity, as the ratio of β-crystals can be increased sufficiently, allowing sufficient porosity to be obtained, it is preferable.

It is preferable that the β-crystal ratio in the polypropylene series resin of the film-shaped object prior to stretching is adjusted to 30 to 100% by setting the cast rolls to the temperature range described above. More preferable is 40 to 100%, further preferable is 50 to 100%, and most preferable is 60 to 100%. By having the ratio of β-crystals in the film-shaped object prior to stretching at 30% or greater, porositization is facilitated in the subsequent stretching operation, allowing a polypropylene series resin porous film having adequate air-permeating properties to be obtained.

The β-crystal ratio in the film-shaped object prior to stretching is calculated by the formula below, using the crystalline melting heat derived from the α-crystals ($\Delta Hm\alpha$) and the crystalline melting heat derived from the β-crystals ($\Delta Hm\beta$) of the polypropylene series resin (A) that are detected when the film-shaped object is raised in temperature from 25°C to 240°C at a heating rate of 10°C/minute using a differential scanning calorimeter.

$$\beta\text{-crystal ratio (\%)} = [\Delta Hm\beta/(\Delta Hm\beta + \Delta Hm\alpha)] \times 100$$

In the stretching process, uniaxially stretching in the longitudinal direction or the transversal direction is adequate, and biaxially stretching is also adequate. In addition, when carrying out biaxial stretching, simultaneous biaxial stretching is adequate, and successive biaxial stretching is also adequate. When fabricating the present porous film, successive biaxial stretching, which allows the stretching conditions to be selected at each stretching process, and in which controlling the porous structure is facilitated, is more preferable.

Next, at least biaxially stretching the obtained pore-free film-shaped object is more preferable. While biaxial stretching may be simultaneous biaxial stretching or may be successive biaxial stretching, successive biaxial stretching, which allows the stretching conditions (ratio and temperature) to be selected at each stretching process simply, in which controlling the porous structure is facilitated, is more preferable.

The longer direction of film-shaped object and film is termed "longitudinal", and the perpendicular direction with respect to the longer direction is termed "transversal". In addition, stretching in the longer direction is termed "longitudinal stretching", and stretching in the perpendicular direction with respect to the longer direction is termed "transversal stretching".

When successive biaxial stretching is used, while the stretching temperature needs to be selected at suitable times according to the composition and the crystalline state of the resin composition to be used, selection within the ranges of the conditions described below is preferable.

When using successive biaxial stretching, while the stretching temperature needs to be changed at suitable times according to the composition, the crystal-melting peak temperature, the degree of crystallinity, and the like, of the resin composition to be used, for the stretching temperature in longitudinal stretching, roughly 0 to 160°C is preferable, 10 to 155°C is more preferable, and 20 to 150°C is further preferable. Regarding the longitudinal stretch ratio, 2-fold or greater is preferable, 3-fold or greater is more preferable, and 4-fold or greater is further preferable, for the lower limit. Meanwhile, 10-fold or less is preferable, 8-fold or less is more preferable, and 7-fold or less is further preferable, for the upper limit. Carrying out longitudinal stretching within the ranges described above allows a suitable degree of void origins to manifest while rupture during stretching is suppressed.

For the stretching temperature in transversal stretching, roughly 80 to 160°C is preferable, 85 to 155°C is more preferable, and 90 to 150°C is further preferable. Regarding the transversal stretch ratio, 1.2-fold or greater is preferable, 1.5-fold or greater is more preferable, and 1.8-fold or greater is further preferable, for the lower limit. Meanwhile, 10-fold or less is preferable, 8-fold or less is more preferable and 7-fold or less is further preferable, for the upper limit. Carrying out transversal stretching within the ranges described above allows the hole origins formed by longitudinal stretching to be enlarged to a suitable degree and a fine porous structure to manifest.

In addition, regarding the ratio MD/TD between the longitudinal stretch ratio and the transversal stretch ratio, 3.0 or less is preferable, 2.8 or less is more preferable, and 2.6 or less is further preferable as the upper limit. Meanwhile, 1.2 or greater is preferable, 2.0 or greater is more preferable, and 2.2 or greater is further preferable as the lower limit. By biaxially stretching within the range described above, when the film is used as a battery separator, the battery element can be pulled-out from the winding pin without provoking winding slippage in a battery assembly process in which a battery element is pulled-out.

As the stretching speed of the stretching process, 500 to 12,000%/minute is preferable, 1,500 to 10,000%/minute

is further preferable, and 2,500 to 8,000%/minute is further preferable.

It is preferable to perform a heat-treatment on the polypropylene series resin porous film obtained in this manner, with the purpose of improving dimensional stability.

In so doing, by having the heat-treatment temperature at preferably 100°C or higher, more preferably 110°C or higher, and even more preferably 120°C or higher, an effect of dimensional stability can be anticipated. Meanwhile, the heat-treatment temperature is preferably 170°C or lower, more preferably 165°C or lower, and even more preferably 160°C or lower. If the heat-treatment temperature is 170°C or lower, melting of the polypropylene series resin by the heat-treatment is unlikely to occur, allowing the porous structure to be maintained, which is thus preferable.

In addition, during the heat-treatment process, a 1 to 25% relaxation treatment may be performed as necessary. After the heat-treatment, the present porous film is obtained by uniformly cooling and winding.

<Application of the present porous film>

Next, an example in which the present porous film is used as a battery separator to constitute a battery will be described as an example of application of the present porous film.

(Battery)

A non-aqueous electrolytic solution battery containing the present porous film as a battery separator will be described while referring to Fig. 1.

Two poles, a positive electrode plate 21 and a negative electrode plate 22, are wound into a spiral-shape so as to overlap one another through a battery separator 10, and turned into a wound body by holding the outside with a roll-holding tape.

The winding process will be described in detail. One of the ends of the battery separator is passed through a slit portion 1 of a pin (Fig. 2), and the pin is turned only slightly so as to have one end of the battery separator wound onto the pin. In so doing, the surface of the pin and the heat-resistant layer of the battery separator are in contact. Thereafter, the positive electrode and the negative electrode are disposed so as to sandwich the battery separator in between, and the pin is rotated with a winding machine to wind the positive and negative electrodes and the battery separator. After winding, the pin is pulled out from the wound object.

The wound body comprising the positive electrode plate 21, the battery separator 10 and the negative electrode plate 22 that have been wound integrally, is included inside a bottomed cylindrical battery case and welded to lead bodies 24, 25 of the positive electrode and the negative electrode. Next, the electrolytes are injected into the battery can, after the electrolytes have impregnated sufficiently the battery separator 10 and the like, a positive electrode lid 27 is sealed through a gasket 26 around the battery can opening, pre-charging and aging are carried out, allowing a cylindrical non-aqueous electrolytic solution battery to be fabricated.

An electrolytic solution which a lithium salt has been dissolved in an organic solvent can be used.

As organic solvent, there is no particular limitation. For instance, esters such as propylene carbonate, ethylene carbonate, butylene carbonate, γ-butyrolactone, γ-valerolactone, dimethyl carbonate, methyl propionate or butyl acetate, nitriles such as acetonitrile, ethers such as 1,2-dimethoxy ethane, 1,2-dimethoxy methane, dimethoxy propane, 1,3-dioxolane, tetrahydrofuran, 2-methyl tetrahydrofuran or 4-methyl-1,3-dioxolane, or sulfolane and the like may be cited, and these can be used alone or by mixing two species or more.

Among them, an electrolyte in which a lithium hexafluorophosphate ($LiPF_6$) has been dissolved at a proportion of 1.0 mol/L in a solvent comprising 2 parts by mass of methylethyl carbonate mixed with respect to 1 part by mass of ethylene carbonate, is preferable.

As negative electrode, alkaline metal or a compound containing alkaline metal integrated with a power collection material such as a stainless steel mesh can be used.

As the alkaline metal, for instance lithium, sodium or potassium, and the like, may be cited.

As the compound containing alkaline metal, for instance, an alloy between an alkaline metal and aluminum, lead, indium, potassium, cadmium, tin, magnesium or the like, furthermore, a compound between an alkaline metal and a carbon material, a compound between a low potential alkaline metal and a metal oxide or sulfide, and the like, may be cited.

When using a carbon material in the negative electrode, as carbon material, one that allows lithium ion doping and dedoping is adequate. For instance graphite, pyrolytic carbons, cokes, glassy carbons, burned bodies of organic macromolecular compounds, mesocarbon micro beads, carbon fibers, activated charcoal and the like can be used.

In the present embodiment, a carbon material with an average particle size of 10 μm mixed to a solution comprising vinylidene fluoride dissolved in N-methyl pyrrolidone turned into a slurry, this negative electrode mixture slurry passed through a 70-mesh net to remove large particles, then, uniformly coated and dried on both sides of a negative electrode power collector consisting of an 18 μm-thick strip of copper foil, thereafter, compression molded with a roll press and then cut into a strip of negative electrode plate, can be used as the negative electrode.

As positive electrode, a metal oxide such as lithium cobalt oxide, lithium nickel oxide, lithium manganese oxide, manganese dioxide, vanadium pentoxide or chromium oxide, metal sulfide such as molybdenum disulfide, and the like, can be used as active materials. Then, a mixture comprising a conducting material and a binding agent or the like such as polytetrafluoroethylene suitably added to these positive electrode active materials, which has been finished as a molded body with a power collection material such as stainless steel mesh as a core, can be used.

In the present embodiment, a strip of positive electrode plate fabricated in the manner described below can be used as positive electrode. That is to say, flake graphite is added as conducting material and mixed with lithium cobalt oxide ($LiCoO_2$) at a mass ratio (lithium cobalt oxide:flake graphite) of 90:5, this mixture and a solution comprising polyvinylidene fluoride dissolved in N-methyl pyrrolidone are mixed to be turned into a slurry. This positive electrode mixture slurry is passed through a 70-mesh net to remove large particles, then, uniformly coated and dried on both sides of a positive electrode power collector consisting of a 20 $\mu$m-thick aluminum foil, thereafter, compression molded with a roll press and then cut into a strip of positive electrode plate.

<Explanation of terms>

In the present invention, when the expression "main component" is used, unless expressly mentioned, it includes the meaning of allowing other constituents to be contained to an extent that does not impede the functions of the main component, and while this does not specify in particular the proportion of the main component contained, it includes the meaning that the main component occupies 50% by mass or greater within the composition, preferably 70% by mass or greater, and particularly preferably 90% by mass or greater (including 100%).

When the statement "X to Y" (X and Y are any numbers) is used, unless expressly stated otherwise, along with the meaning "X or greater but Y or lower", the meanings "preferably larger than X" and "preferably smaller than Y" are included.

In addition, also when the statement "X or greater" or "Y or less" (X and Y are any numbers) is used, unless expressly stated otherwise, the meanings "preferably larger than X" and "preferably smaller than Y" are included.

[Examples]

Hereafter, the porous film of the present invention will be described in further detail by indicating examples and comparative examples. The present invention is not to be limited to these. The longer direction of the porous film is termed "longitudinal" and the direction perpendicular to the longer direction is termed "transversal".

(1) Film thickness

Thickness was measured at 500 locations arbitrarily in the film plane with a 1/1,000 mm dial gauge, and the mean value thereof served as the film thickness.

(2) Coefficient of static friction against SUS

The coefficient of static friction against SUS was measured from measurements between an SUS surface and a porous film surface according to JIS K7125. SUS304 with an arithmetic average of the surface roughness of 0.019 $\mu$m and a thickness of 1.8 mm was used as the SUS plate. For the sliding direction, the SUS plate was slid oriented in the transversal direction of the porous film.

(3) Coefficient of static friction against film

The coefficient of static friction against film was measured from measurement between porous film surfaces according to JIS K7125. Two porous films were overlaid aligned in the same longitudinal and transversal directions, and were slid oriented in the transversal direction of the porous films.

Measurements were carried out with each of the front-front, front-back and back-back porous film combinations, and the largest numerical value served as the coefficient of static friction against film.

(4) Porosity

The actual mass W1 of the porous film was measured, the mass W0 at 0% porosity was calculated from the density and the thickness of the resin composition, and from these values, porosity was calculated based on the following formula:

$$Porosity\ (\%) = \{(W0-W1)/W0\} \times 100$$

(5) Air-permeability

Air-permeability (seconds/100 ml) of the porous film was measured according to JIS P8117.

(6) Modulus of elasticity in tension

A tension and compression testing machine (manufactured by Intesco Co., Ltd.; Model 200X) was used for the measurement of the modulus of elasticity in tension. A porous film that was cut-out longitudinally at a length of 200 mm and transversally at a width of 5 mm was used as a test piece. The test piece was pulled with conditions of 150 mm inter-chuck distance and 5 mm/min crosshead speed. By way of the load applied on the load cell when the chuck spacing has extended 3%, the modulus of elasticity in tension was determined from the formula below. The thickness of the porous film was determined from mean values measured at three locations.

$$Modulus\ of\ elasticity\ in\ tension\ (MPa) = \{load\ (kg) \times 9.8\ (m/s^2)/extended$$

$$distance\ (mm)\}/cross\ section\ (mm^2) \times inter\text{-}chuck\ distance\ (mm)$$

The mean value of moduli of elasticity in tension measured at 5 points served as the modulus of elasticity in tension.

(7) Pin-releasability

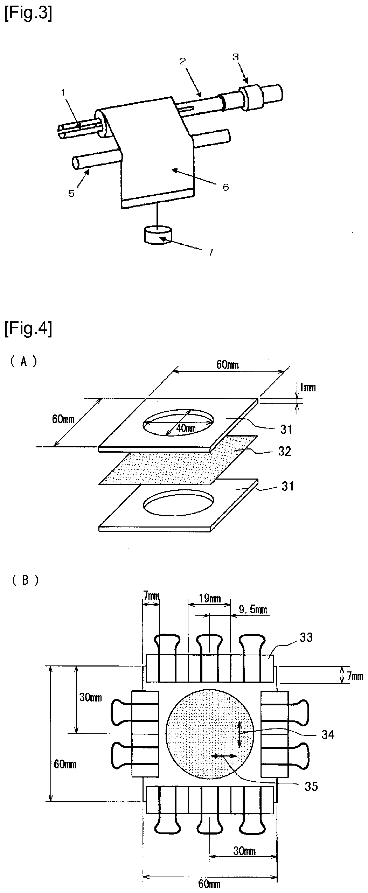

In the manner of Fig. 3, two porous films of 500 mm in length and 60 mm in width were overlaid, one of the ends was inserted into the slit of a winding shaft (Ø 4 mm; slit spacing: 0.8 mm) made from ultra-hard alloy, a load of 500 gf was hung and stabilized at the opposite end so as to apply a load uniformly in the width direction, and winding was performed at a speed of 20 rpm. The ends of the wound porous films were secured with a tape (product name: DIAHALOTAPE 15 mmm width) so as not to loosen. Next, the porous films were held with a donut-shaped collar comprised of a stainless cylinder of 10 mm in height in which a hole of 0 41.0 mm was opened, and the winding shaft was removed at a speed of 200 mm/min. This was repeated four times, pin-releasability was evaluated based on the assessment criteria below, and the porous films that were "Δ(triangle)" or better were accepted.
[0162]

　　"O(circle)": the number of times the pull-out was possible without provoking winding slippage was three times or more
　　"Δ(triangle)": the number of times the pull-out was possible without provoking winding slippage was twice or more
　　" x (cross)": the number of times the pull-out was possible without provoking winding slippage was once or less

(8) Differential scanning calorimetry (DSC)

For the porous films obtained in the examples and the comparative examples, the temperature was raised from 25°C to 240°C at a scanning speed of 10°C/minute then retained for one minute, next, the temperature was lowered to 240°C to 25°C at a scanning speed of 10°C/minute then retained for one minute, next, the temperature was raised again from 25°C to 240°C at a scanning speed of 10°C/minute, using a differential scanning calorimeter (DSC-7) manufactured by Perkin-Elmer.
According to whether or not a peak was detected at 145 to 160°C, which is the crystal-melting peak temperature (Tmβ) derived from a β-crystal of the polypropylene series resin, during this re-rise in temperature, the presence or absence of β activity was evaluated with the following criteria:

　　"O(circle)": if Tmβ was detected within the range of 145°C to 160°C (presence of β activity)
　　" x (cross)": if Tmβ was not detected within the range of 145°C to 160°C (no β activity)

Measurement of the β activity was carried out with a sample amount of 10 mg under nitrogen atmosphere.

(9) Wide-angle X-ray diffractometry measurement (XRD)

A porous film was cut out into a square of 60 mm vertically and 60 mm horizontally, and sandwiched between two aluminum plates (material: JIS A5052; size: 60 mm vertical, 60 mm horizontal; thickness: 1 mm) which center had a hole open in the shape of a 40 mmØ circle as shown in Fig. 4 (A), and the periphery was secured with clips as shown in Fig. 4 (B).

The porous film in a constrained state by two aluminum plates was introduced into a programmable mechanical convection oven (manufactured by Yamato Scientific Co., Ltd., Model: DKN602) at a setting temperature of 180°C and a display temperature of 180°C, retained for three minutes, then, the setting temperature was changed to 100°C, and slow cooling was carried out to 100°C over 10 minutes or longer time. At the time point where the display temperature became 100°C, the porous film was taken out, and for the porous film obtained by cooling under 25°C atmosphere for 5 minutes still in a constrained stated by two aluminum plates, wide-angle X-ray diffractometry measurement was carried out for the central 40 mmØ circular portion, with the following measurement conditions:

Wide-angle X-ray diffractometer: manufactured by Mac Science; Model No.: XMP18A
X-ray source: CuKα beam; output: 40kV, 200mA
Scanning method: 2θ/θ scan, 2θ range: 5° to 25°; scanning interval: 0.05°; scanning speed: 5°/min

For the obtained diffraction profile, the presence or absence of β activity was evaluated from the peak derived from the (300) plane of a β-crystal of the polypropylene series resin, as follows:

"○(circle)": if a peak was detected in a range of 2θ = 16.0 to 16.5° (presence of β activity)
"✕ (cross)": if a peak was not detected in a range of 2θ = 16.0 to 16.5° (no β activity)

If the porous film piece cannot be cut out into a square of 60 mm vertically and 60 mm horizontally, adjustments may be made so that the porous film is placed in the center in the 40 mmØ circular hole.

[Example 1]

A resin composition A1 was obtained, comprising 0.2 parts by weight of oxidation inhibitor (manufactured by Ciba Specialty Chemicals Corporation; IRGANOX B225) and 0.2 parts by mass of N,N'-dicyclohexyl-2,6-naphthalene dicarboxamide as β-crystal nucleating agent, which were added with respect to 100 parts by mass of polypropylene series resin (manufactured by Prime Polymer Co., Ltd.; Prime Polypro F300SV; MFR: 3g/10 minutes), and melt-kneaded at 270°C to be processed into pellet form using a co-rotating twin screw extruder (port diameter: 40 mmØ; L/D = 32) manufactured by Toshiba Machine Co., Ltd.

The resin composition A1 was extruded at 200°C and solidified by cooling with cast rolls at 130°C to fabricate a pore-free film-shaped object of 80 μm in thickness. The pore-free film-shaped object was successively biaxially stretched, 4-fold longitudinally at 105°C followed by two-fold transversally at 145°C, and then relaxed 6% in the width direction at 145°C to obtain a polypropylene series resin porous film.

Measurements and evaluations of various properties of the obtained polypropylene series resin porous film were carried out, which results are compiled in Table 1.

[Example 2]

Separately from the resin composition A1, a resin composition B1 was obtained, comprising 10 parts by mass of microcrystalline wax (manufactured by Nippon Seiro Co., Ltd.; Hi-Mic1090) and 2.5 parts by weight of polyethylene series master batch containing a nucleating agent (manufactured by Riken Vitamin Co., Ltd.; RIKEMASTER CN-002) which were added to 90 parts by mass of high density polyethylene (manufactured by Prime Polymer Co., Ltd.; Hi-ZEX3300F; density: 0.950 g/cm$^3$; MFR: 1.1 g/10 minutes) as polyethylene series resin, and melt-kneaded at 230°C to be processed into pellet form using the same model of co-rotating twin screw extruder.

The resin compositions A1 and B1 were extruded at 200°C with different extruders, passed through a feed block for two species and three layers, co-extruded using a T-die for multi-layer molding, layered in such a way that the film-thickness ratios after stretching were A1/B1/A1 = 3.5/1/3.5, and then solidified by cooling with cast rolls at 125°C to fabricate a layered pore-free film-shaped object of 80 μm in thickness.

The layered pore-free film-shaped object was successively biaxially stretched, 4-fold longitudinally at 120°C followed by two-fold transversally at 100°C, and then relaxed 5% in the width direction at 115°C to obtain a layered porous film.

Measurements and evaluations of various properties of the obtained layered porous film were carried out, which results are compiled in Table 1.

[Example 3]

The resin compositions A1 and B1 were extruded at 200°C with different extruders, passed through a feed block for two species and three layers, co-extruded using a T-die for multi-layer molding, layered in such a way that the film-thickness ratios after stretching were A1/B1/A1 = 3.5/1/3.5, and then solidified by cooling with cast rolls at 127°C to fabricate a layered pore-free film-shaped object of 80 μm in thickness.
The layered pore-free film-shaped object was successively biaxially stretched, 4.6-fold longitudinally at 120°C followed by two-fold transversally at 98°C, and then relaxed 6% in the width direction at 115°C to obtain a layered porous film.
Measurements and evaluations of various properties of the obtained layered porous film were carried out, which results are compiled in Table 1.

[Example 4]

The resin compositions A1 and B1 were extruded at 200°C with different extruders, passed through a feed block for two species and three layers, co-extruded using a T-die for multi-layer molding, layered in such a way that the film-thickness ratios after stretching were A1/B1/A1 = 3.5/1/3.5, and then solidified by cooling with cast rolls at 126°C to fabricate a layered pore-free film-shaped object of 80 μm in thickness.
The layered pore-free film-shaped object was successively biaxially stretched, 4-fold longitudinally at 110°C followed by 3-fold transversally at 110°C, and then relaxed 22% in the width direction at 125°C to obtain a polypropylene series resin porous film.
Measurements and evaluations of various properties of the obtained polypropylene series resin porous film were carried out, which results are compiled in Table 1.

[Comparative Example 1]

The resin compositions A1 and B1 were extruded at 200°C with different extruders, passed through a feed block for two species and three layers, co-extruded using a T-die for multi-layer molding, layered in such a way that the film-thickness ratios after stretching were A1/B1/A1 = 1/3/1, and then solidified by cooling with cast rolls at 126°C to fabricate a layered pore-free film-shaped object of 80 μm in thickness.
The layered pore-free film-shaped object was successively biaxially stretched, 6-fold longitudinally at 115°C followed by two-fold transversally at 110°C, and then relaxed 6% in the width direction at 125°C to obtain a polypropylene series resin porous film.
Measurements and evaluations of various properties of the obtained polypropylene series resin porous film were carried out, which results are compiled in Table 1.

[Comparative Example 2]

A resin composition B2 was obtained, comprising 100 parts by mass of high density polyethylene (manufactured by Mitsui Chemicals Inc.; Hi-ZEX 7000F; density: 0.956g/cm$^3$; MFR: 0.04g/10 minutes), 110 parts by mass of barium sulfate (manufactured by Sakai Chemical Co., Ltd.; B-55; average particle size: 0.66 μm) as filler, and 8 parts by mass of solid castor oil (manufactured by Hokoku Corporation, HCOP) as plasticizer, which were melt-kneaded to be processed into pellet form.
The resin composition B2 was extruded at 200°C and solidified by cooling with cast rolls at 105°C to obtain a pore-free film-shaped object of 120 μm. The pore-free film-shaped object was stretched at stretch ratios of 4.5-fold longitudinally at 100°C followed by 4-fold transversally at 105°C to obtain a polyethylene series resin porous film.
Measurements and evaluations of various properties of the obtained polyethylene series resin porous film were carried out, which results are compiled in Table 1.

[Table 1]

| | | | Example 1 | Example 2 | Example 3 | Example 4 | Comparative Example 1 | Comparative Example 2 |
|---|---|---|---|---|---|---|---|---|
| Production conditions | Casting temperature | °C | 130 | 125 | 127 | 126 | 126 | 105 |
| | Longitudinal stretch ratio | fold | 4 | 4 | 4.6 | 4. | 6 | 4.5 |
| | Transversal stretch ratio | fold | 2 | 2 | 2 | 3 | 2 | 4 |
| Physical properties | Film thickness | μm | 20 | 20 | 16 | 20 | 20 | 25 |
| | Coefficient of static friction | against film | | 0.6 | 0.6 | 0.7 | 0.6 | 0.9 | 0.3 |
| | | against SUS | - | 0.5 | 0.5 | 0.5 | 0.4 | 0.9 | 0.2 |
| | Porosity | % | 58 | 45 | 49 | 66 | 65 | 55 |
| | Air-permeability | sec/100ml | 300 | 600 | 420 | 520 | 500 | 230 |
| | Modulus of elasticity in tension | MPa | 550 | 650 | 520 | 370 | 680 | 300 |
| | β activity | DSC | - | ○ | ○ | ○ | ○ | ○ | × |
| | | XRD | - | ○ | ○ | ○ | ○ | ○ | × |
| | Pin-releasability | - | ○ | ○ | ○ | Δ | × | × |

EP 2 543 697 B1

The physical property values obtained in each of the examples and comparative examples are shown in Table 1.

Compared to the films of the comparative examples which were constituted outside the ranges defined by the present invention, the polypropylene series resin porous films of the examples, which were constituted within the ranges defined in the present invention, were found to have excellent slipping ability and processability.

Elsewhere, from Comparative Example 1, it was found that excellent pin-releasability is not manifested when the value of the coefficient of static friction against SUS is large. In addition, from Comparative Example 2, it was found that even if the coefficient of static friction against SUS is small, due to the modulus of elasticity in tension being small, the strength become insufficient, giving rise to problems in pin-releasability.

Withing the examples, from the point of view of porosity, Example 1 was found to be a more preferable mode.

[Industrial applicability]

The porous film of the present invention can be applied in a variety of applications that require air-permeating property. It can be used extremely adequately as materials such as lithium battery separator; hygienic materials such as body fluid absorption pads such as for disposable paper diapers, sanitary goods or bed sheets; medical materials such as operating gown or hot compress base material; clothing materials such as for jackets, sportswear or rainwear; architectural materials such as wall paper, roof waterproofing material, heat insulating material, sound proofing material; desiccating agent; moisture prevention agent; deoxygenation agent; disposable heat pad; packaging materials for freshness retention packaging or food packaging.

[Description of the numerals to the drawings]

1       slit portion
2       pin
3       collar
5       rotating roll portion
6       porous film
7       weight
10      battery separator
20      secondary battery
21      positive electrode plate
22      negative electrode plate
24      positive electrode lead body
25      negative electrode lead body
26      gasket
27      positive electrode lid
31      aluminum plate
32      film
33      clip
34      film longitudinal direction
35      film transversal direction

**Claims**

1.  Method for producing a polypropylene series resin porous film having a polypropylene series resin as the main component, by porositization by biaxial stretching, wherein in the biaxial stretching the ratio MD/TD between the longitudinal stretch ratio MD and the transversal stretch ratio TD is in the range of 1.2 to 2.8, **characterized in that** the coefficient of static friction measured according to the norm JIS K7125 of said film against the film itself is greater than the coefficient of static friction against a SUS plate which has an arithmetic average of the surface roughness of 0.019 $\mu$m and a thickness of 1.8 mm.

2.  The method of claim 1, wherein the polypropylene series resin porous film is prepared by extrusion and the cooling-solidification temperature of the cast rolls is between 80 and 150°C.

3.  The method according to claim 1 or 2, wherein the coefficient of static fiction of the polypropylene series resin porous film against the film itself is 0.5 or greater, and the coefficient of static friction against the SUS plate is less than 0.9, but the coefficient of static friction of said film against the film itself is greater than the coefficient of static friction against the SUS plate , and the modulus of elasticity in tension in the flow direction is 350 MPa or greater.

4. The method according to any of claims 1 to 3, wherein the difference between the coefficient of static friction of the polypropylene series resin porous film against the front side and the coefficient of static friction against the back side is 10% or less.

5. The method according to any of claims 1 to 4, wherein the porosity of the polypropylene series resin porous film is 40% or greater.

6. The method according to any of claims 1 to 5, the polypropylene series resin porous film comprising a β-crystal nucleating agent.

7. A battery separator comprising the polypropylene series resin porous film produced according to the method of any of claims 1 to 6.

8. A non-aqueous electrolytic solution battery, wherein the battery separator according to claim 7 is integrated.

**Patentansprüche**

1. Verfahren zur Herstellung eines porösen Films aus einem Polypropylenharz mit einem Polypropylenharz als Hauptkomponente durch Porosierung mittels biaxialem Strecken, worin das Verhältnis MD/TD zwischen dem longitudinalen Streckverhältnis MD und dem transversalen Streckverhältnis TD beim biaxialem Strecken im Bereich von 1,2 bis 2,8 ist, **dadurch gekennzeichnet, dass** der Haftreibungskoeffizient des vorgenannten Films, welcher nach der Norm JIS K7125 gemessen wird, gegenüber dem Film selbst größer ist als der Haftreibungskoeffizient gegenüber einer SUS Platte, welche ein arithmetisches Mittel der Oberflächenrauheit von 0,019 μm und eine Dicke von 1,8 mm aufweist.

2. Das Verfahren nach Anspruch 1, worin der poröse Film aus einem Polypropylenharz durch Extrusion hergestellt wird und die Abkühlungs-Verfestigungs-Temperatur der Gießwalzen zwischen 80 und 150 °C ist.

3. Das Verfahren nach Anspruch 1 oder 2, worin der Haftreibungskoeffizient des porösen Films aus einem Polypropylenharz gegenüber dem Film selbst 0,5 oder mehr ist und der Haftreibungskoeffizient gegenüber der SUS Platte weniger als 0,9 ist, wobei der Haftreibungskoeffizient des vorgenannten Films gegenüber dem Film selbst allerdings größer ist als der Haftreibungskoeffizient gegenüber einer SUS Platte, und das Zug-Elastizitätsmodul in Zugrichtung des vorgenannten Films 350 MPa oder größer ist.

4. Das Verfahren nach einem der Ansprüche 1 bis 3, worin die Differenz zwischen dem Haftreibungskoeffizienten des porösen Films aus einem Polypropylenharz gegenüber der Vorderseite und dem Haftreibungskoeffizienten gegenüber der Rückseite 10% oder weniger ist.

5. Das Verfahren nach einem der Ansprüche 1 bis 4, worin die Porosität des Polypropylenharzes 40% oder größer ist.

6. Das Verfahren nach einem der Ansprüche 1 bis 5, worin das Polypropylenharz einen β-Kristall Keimbildner umfasst.

7. Batterieseparator, umfassend das das Polypropylenharz, hergestellt nach dem Verfahren nach einem der Ansprüche 1 bis 6.

8. Batterie mit nicht-wässriger Elektrolytlösung, in die der Batterieseparator nach Anspruch 7 integriert ist.

**Revendications**

1. Procédé de production d'un film poreux de résine de la série des polypropylènes ayant une résine de la série des polypropylènes comme composant principal, par porositisation par étirement biaxial, où dans l'étirement biaxial, le rapport MD/TD entre le rapport d'étirement longitudinal MD et le rapport d'étirement transversal TD se trouve dans la plage allant de 1,2 à 2,8,

**caractérisé en ce que** le coefficient de frottement statique mesuré selon la norme JIS K7125 dudit film contre le film lui-même est supérieur au coefficient de frottement statique contre une plaque SUS, qui a une moyenne arithmétique de la rugosité de surface de 0,019 μm et une épaisseur de 1,8 mm.

2. Procédé de la revendication 1, dans lequel le film poreux de résine de la série des polypropylènes est préparé par extrusion et la température de solidification par refroidissement des cylindres de coulée est comprise entre 80 et 150°C.

3. Procédé selon la revendication 1 ou 2, dans lequel le coefficient de frottement statique du film poreux de résine de la série des polypropylènes contre le film lui-même est supérieur ou égal à 0,5, et le coefficient de frottement statique contre la plaque de SUS est inférieur à 0,9, mais le coefficient de frottement statique dudit film contre le film lui-même est supérieur au coefficient de frottement statique contre la plaque SUS et, le module d'élasticité en traction dans la direction d'écoulement dudit film est supérieur ou égal à 350 MPa.

4. Procédé selon l'une des revendications 1 à 3, dans lequel la différence entre le coefficient de frottement statique du film poreux de résine de la série des polypropylènes contre le côté avant et le coefficient de frottement statique contre le côté arrière est inférieure ou égale à 10%.

5. Procédé selon l'une des revendications 1 à 4, dans lequel la porosité du film poreux de résine de la série des polypropylènes est supérieure ou égale à 40%.

6. Procédé selon l'une des revendications 1 à 5, dans lequel le film poreux de résine de la série des polypropylènes comprend un agent de nucléation du cristal β.

7. Séparateur de batterie comprenant le film poreux de résine de la série des polypropylènes produit selon le procédé de l'une des revendications 1 à 6.

8. Batterie à solution électrolytique non aqueuse, dans laquelle le séparateur de batterie selon la revendication 7 est intégré.

[Fig.1]

[Fig.2]

[Fig.3]

[Fig.4]

( A )

( B )

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008248231 A
- JP 2000030683 A
- JP 2007204518 A
- JP 3449656 B
- JP 2007160693 A
- EP 1302992 A

- JP 3739481 B
- JP H04181651 B
- JP 2003306585 A
- JP H06289566 B
- JP H09194650 B

**Non-patent literature cited in the description**

- *Macromol. Chem.,* 1986, vol. 187, 643-652
- *Prog. Polym. Sci.,* 1991, vol. 16, 361-404
- *Macromol. Symp.,* 1995, vol. 89, 499-511

- *Macromol. Chem.,* 1964, vol. 75, 134
- **A. ZAMBELLI et al.** *Macromolecules,* 1975, vol. 8, 687